# EUROPEAN PATENT SPECIFICATION

(11) **EP 0 567 515 B1**
(45) Date of publication and mention of the grant of the patent: **17.01.1996**
(21) Application number: 92903058.3
(22) Date of filing: 15.01.1992
(51) Int. Cl.: A22C 25/16

(54) **METHOD AND APPARATUS FOR REMOVING FISH BONES**
VERFAHREN UND VORRICHTUNG ZUM ENTGRÄTEN VON FISCHEN
PROCEDE ET DISPOSITIF D'EXTRACTION DES ARETES D'UN POISSON

(30) Priority: 18.01.1991 SE 9100163
(43) Date of publication of application: 03.11.1993
(73) Proprietor: LINDGREN, Sören, S-753 34 Uppsala (SE)
(72) Inventor: KOLJONEN, Kari, S-754 37 Uppsala (SE)
(74) Representative: Kummelsten, Per-Arne
(86) International application number: SE9200023
(87) International publication number: WO9212641

(56) References cited:
- DE-A- 2 641 427

## Description

The present invention relates to a method and to a device for removing bones from fish. The invention is preferably intended for removing so-called nerve bones or radial bones from salmon fillets, but can also be used for removing bones from whole fish and from fish pieces.

The invention is thus primarily intended for removing so-called nerve bones from salmon fillets, but can be used for removing different types of bones from different types of fish. The problem, however, is an old problem that is encountered particularly with salmon, since this fish is often served smoked or in a raw, spiced state, and then in the form of thin slices. These nerve bones have caused difficulties when thinly slicing fish, since the bones sometimes fasten to the knife and result in tearing of the slices. It has been necessary under all circumstances to remove these bones, either whole or in pieces, prior to or during the slicing of the fish. Those pieces of bone which are not readily plucked out accompany the slices and cause irritation when the diner feels the bones in his or her mouth.

In order for the fish monger to be able to deliver a fully prepared fish, with the nerve bones removed therefrom, it has been necessary to draw these bones from the fillet manually, in some way or another, for example with the aid of tweezers or pincettes. This task is expensive and therewith increases the cost of the already rather expensive fish. Irrespective of when and how the bones are removed, there is always also a danger that the flesh of the fish will be damaged, therewith making it difficult to produce complete and attractive slices therefrom.

Although endeavours have been made to remove fish bones mechanically, no machine which operates fully satisfactorily has yet been made available. Those machines that are known in the art have either failed to remove bones quickly and efficiently, or have damaged the flesh. A method and device for removing bones from fish is disclosed in DE-A-2 641 427.

The object of the present invention is to overcome the aforementioned problems and other problems associated with the removal of bones from the flesh of fish. This object is achieved with a method and a device of the kind set forth in the claims, which also disclose the special characteristic features of the invention.

The invention will now be described in more detail with reference to the accompanying drawings, in which
Figure 1 is a sectioned view of an inventive device and a fish fillet illustrating the inventive process;
Figure 2 is a partially sectioned side view of one embodiment of the inventive device, said section being taken on the line II-II in Figure 4;
Figure 3 is a side view of part of the device shown in Figure 2 and illustrates part of the drive transmission;
Figure 4 is a partially sectioned view of a part of the device illustrated in Figure 2, said section being taken from beneath on the line IV-IV in Figure 2;
Figure 5 is a partially sectioned side view of a second embodiment of the inventive device,
Figure 6 is a partially sectioned view of a part of the device shown in Figure 5, said section being taken from beneath on the line VI-VI in Figure 5; and
Figure 7 is a partially sectioned side view of part of a third embodiment of the inventive device.

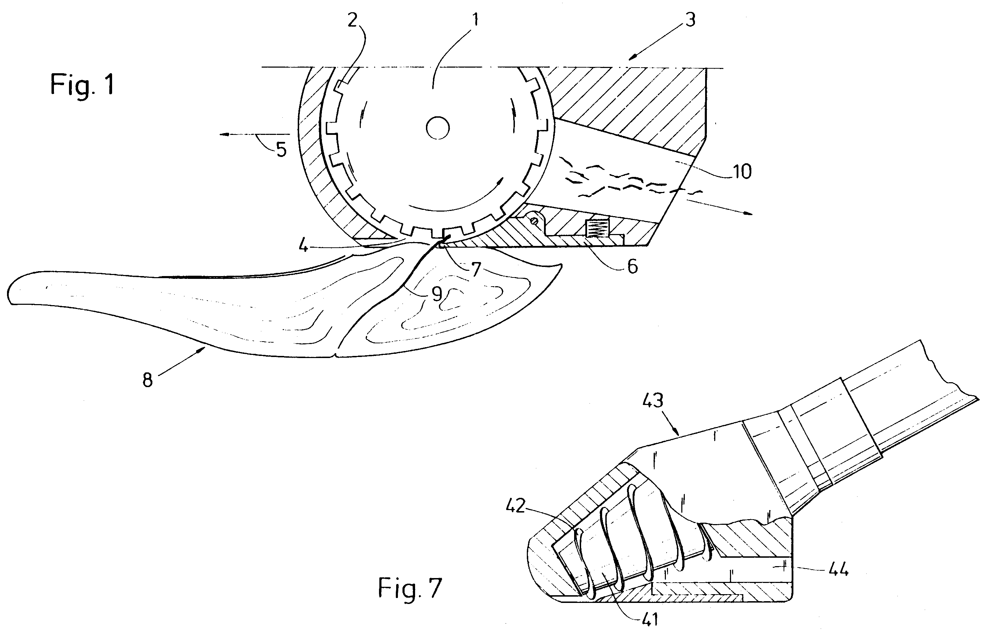

The inventive device comprises fundamentally, see Figure 1, a rotatable roller 1 which is provided with cogs or ridges 2, which in the illustrated case extend in the direction of the roller axis. The roller 1 is journalled for rotation in a housing 3. The housing 3 has en opening 4 through which the cogs 2 are exposed. Located at one edge of the opening, the rear edge with respect to the working direction indicated by the arrow 5, is a preferably resilient or springy counter-pressure device 6, the free edge 7 of which defines a gap between itself and the cogs 2. In one embodiment which is particularly suited for drawing nerve bones from salmon, this gap has a size of about 0.1-0.2 mm. As a result of the aforesaid resiliency or springiness of the edge 7, the gap can widen to a size of about 0.3-0.4 mm. This increase in the size of the gap occurs as a result of the pressure exerted by bone squeezed in the gap.

The size of this gap, however, must basically be adapted to the nature and type of bone to be removed with the aid of the inventive device.

When the inventive device is moved forward over a piece of fish 8, for instance a fillet, in the direction of the arrow 5, while exerting a slight pressure against the fillet, the illustrated nerve bone 9 is pressed up slightly from the fillet, to an extent which is sufficient for the bone to be caught between the edge 7 and a cog 2. The springiness of the counter-pressure device 6 is so adapted that the bone will be clamped between said device and said cog 2 with a force sufficient for the bone to be entrained by the roller 1 and carried upwardly and out of the fillet, as the roller 1 rotates. The removed bones are then fed out through the opening 10.

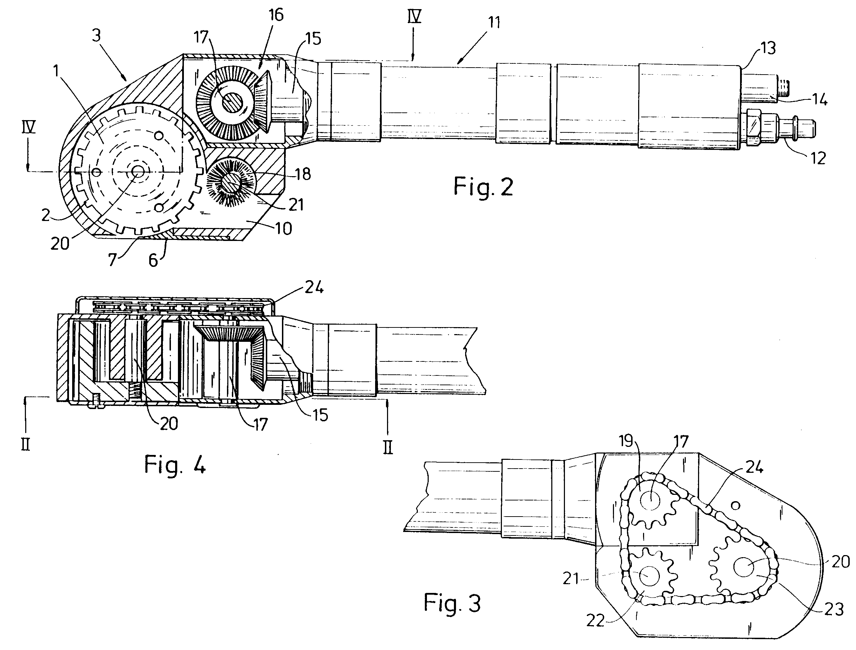

Figure 2 illustrates an embodiment of the inventive device which is intended for manual use. A hollow tubular handgrip 11 houses a pneumatically driven rotary motor, and a connection 12 for a compressed air hose is mounted on the end wall 13 of the handgrip 11. Also mounted on the end wall 13 is an exhaust air outlet having a sound-dampening device 14. The handgrip 11 also houses a reduction gear, the axially mounted and outwardly projecting shaft 15 of which is connected to a bevel gear 16 which functions to transfer rotary movement of the shaft to a further shaft 17 mounted perpendicular to the shaft 15. The handgrip 11 is detachably connected to the housing 3, which accomodates both the bevel gear 16 and the roller 1. The shaft 17 drives both the roller 1 and a rotatable brush 18, which is positioned in the outlet 10 adjacent the roller 1.

The scrap removed by the inventive device collects in the outlet 10. This scrap preferably consists of bone, whole bone, broken bone and deformed bone, as well as fat, skin and flesh. Such scrap can be removed by flushing the tool and the outlet 10 with water as required, but a scrap suction device is preferably connected to the outlet 10 for constantly removing fish scrap. In certain instances, it may be more appropriate to suck the fish scrap in an upward direction, through an overlying chamber, not shown in the drawings, to which the suction device is connected.

As will be seen from Figure 3, a chain or sprocket wheel 19 is fitted to one end of the shaft 17. The roller drive shaft 20 is fitted with a chain or sprocket wheel 23, and the brush drive shaft 21 is fitted with a chain or sprocket wheel 22. The three chain wheels 19, 22, 23, lie in mutually the same plane and a chain 24 extends around said chain wheels, so that said wheels will be driven synchronously by the shaft 17. In the illustrated case, the counter-pressure device 16 rests directly on the underside of the housing 3, in a conforming recess. The counter-pressure device may, for instance, be made of stainless steel or of a plastic material. The material may be such as to impart a certain degree of springiness, or resilience, to the front end 7 of the counter-pressure device 6 facing towards the opening 4. Alternatively, an insert (not shown) made of an appropriate flexible material, such as rubber or plastic, may be placed between the counter-pressure device 6 and the housing 3, thereby achieving the desired resilience of said counter-pressure device. The counter-pressure device 6 may also be adjustable, so as to enable the aforementioned gap between the front end 7 and respective cogs 2 to be adjusted to type of fish bone to be removed with the aid of the inventive device.

The brush 18 is mounted adjacent the roller 1 and rotates in the same direction as said roller. Thus, the brush will brush in a direction which is opposed to the direction in which the roller 1 rotates. As before mentioned, scraps of flesh and fat removed from the fish will accompany the bones that are drawn up from the fish fillets, and are collected together with said bones in the interspaces between respective cogs 2 on the roller 1. In the case of the illustrated embodiment, this scrap is brushed from the roller 1 with the aid of the rotating brush 18 and ejected out through the opening 10, to which there is connected some suitable form of device which will carry away the scrap, e.g. by suction.

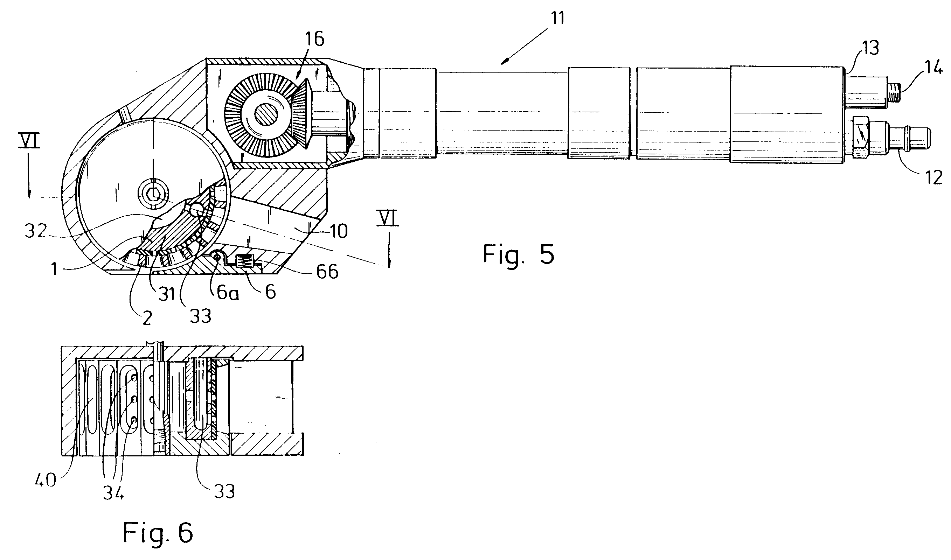

Figures 5 and 6 illustrate an alternative embodiment of the inventive device. This device differs from the earlier described device, primarily in that the rotatable brush has been replaced with a blowing system for removal of the fish scrap. The roller 1 has a relatively thin wall and rotates about a tubular sleeve 31 which encloses a central chamber 32. This chamber 32 is connected to a compressed-air system so that an over-pressure will prevail within the chamber. Extending from the chamber 32 is a channel 33 which is comprised of an elongated, axial slot or a number of mutually adjacent holes which penetrate the wall of the sleeve 31 at a position in front of the opening 10. The bottom surfaces of the interspaces between respective cogs 2 are perforated either by a slot or by an array of penetrating holes 34, as shown. As a result compressed air is puffed out through the holes 39 each time an interspace passes the channel 33. The fish scrap collected in said interspace, in the form of a cork plugging said interspace, will be blown out and into the opening 10, from where it is transported in the aforesaid manner. In the case of this embodiment, the interspaces are blown clean intermittently, which provides a better effect than when a continuous blowing action is employed, primarily because there is then time for a given pressure to build-up in the chamber 32 between each blowing occasion. As will be understood, the air may also be blown in a direction towards the aforesaid chamber, not shown, located above the roller 1.

In the Figure 5 embodiment, the counter-pressure device 6 can be tipped about a pivot 6a and is biased towards a predetermined position, by means of a spring 6b, in a manner to achieve the function described with reference to Figure 1. This embodiment is particularly suited for the removal of thicker and more robust bones with the inventive device.

In the embodiment illustrated in Figures 2-4, the inventive device includes a roller 1 having cogs which extend axially from one end of the roller to the other. In the case of the embodiment illustrated in Figures 5 and 6, the roller 1 has elongated slots 40 which are milled axially with interspaces provided uniformly therebetween in the cylindrical surface of the roller 1. The radially directed surfaces of the cogs are smooth in both instances. However, these surfaces may be provided with different types of embossment, partly to improve the grip on the bones and partly to prevent the bones from being severed against the counter-pressure device, although while enabling the bones to be deformed through the aforesaid pinching or squeezing action. The cogs 2 may thus be knurled or slotted or grooved around the circumference of the roller. As shown, the cogs are arranged purely axially, although other arrangements are possible, of course. For example, the cogs may be arrowed slightly so that the bones which are to be withdrawn by the cogs from the fish will move in towards the centre of the roller.

Another embodiment of the inventive device is illustrated in Figure 7. In this case, the roller 1 has been replaced with a body 41 having the form of a truncated cone, on which there extends a helical ridge 42 and which has rotational direction such that the scrap material which is caught by the helical ridge 42 is moved rearwardly through the housing 43 and out through an opening 44. The advantage with this construction is that it allows the bevel gear 16 to be omitted. Fish scrap is removed by the transporting action of the helical ridge 42. As with the earlier embodiments of the invention, however, the opening 44 preferably has means for transporting away the fish scrap. The opening 44 may also have some other position around the body 41, for example above the same.

The invention has been described by way of examples of devices which are normally intended to be used manually. In order to avoid the risk of undue strain on the user, however, the device is preferably suspended from a balancing block, in a conventional manner. The invention is not restricted, however, to hand-held devices, and it will be readily realized by the person skilled in this art that the invention can equally as well be applied in machines in which the fish pieces pass beneath a stationary device for drawing up the bones. It will also be understood that the inventive device can also be used to remove other types of bone than the afore-described nerve bones.

## Claims

1. A method of removing bones from fish, preferably from fish pieces, such as fish fillets,
**characterized** by passing part of a fish bone into a gap defined between a rotating element and a counter-pressure device; and causing the rotating element to pinch the fish bone between said element and a side of said counter-pressure device which faces towards said rotating element, while the flesh around said bone is held in place by that side of the counter-pressure device which faces towards the fish as the bone is withdrawn therefrom.

2. A device for removing fish bones from fish, preferably fish pieces, such as fish fillets,
**characterized** by a housing (3, 43) which houses a rotatable, driven element (1, 41) provided with engagement means (2, 42); an opening (4) in said housing (3, 43) which is operative to expose a part of the bone-engagement means (2, 42) on said driven element (1, 41); a counter-pressure device (6) at that end of the opening (4) towards which the bone-engagement means (2, 42) is moved by the rotation of the driven element (1, 41); and a gap defined between the counter-pressure device (6) and the bone-engagement means (2, 42).

3. A device according to claim 2,
**characterized** in that the bone-engagement means is in the form of axially extended cogs (2).

4. A device according to claim 2,
**characterized** in that the engagement means is in the form of a helical ridge (42).

5. A device according to claim 3 or 4,
**characterized** in that the radially directed surface of the helical ridge or the cogs (2, 42) is embossed.

6. A device according to any one of claims 2-5,
**characterized** in that the gap defined by said bone-engagement means (2, 42) and said counter-pressure device (6) is adjustable.

7. A device according to any one of claims 2-6,
**characterized** by a rotatable brush (18) which is mounted adjacent the driven element (1) and which functions to brush clean the bone-engagement means (2) and the interspaces therebetween.

8. A device according to any one of claims 2-6,
**characterized** in that radial holes (39) are provided in the driven element (1, 41) between the engagement means (2, 42) for blowing air therethrough so as to remove fish scrap collections through said opening (10, 44).

## Patentansprüche

1. Verfahren zum Entgräten von Fisch, vorzugsweise von Fisch-Stücken wie etwa Fisch-Filet
**gekennzeichnet** durch Einführen eines Teils einer Fischgräte in einen Spalt, der zwischen einem rotierenden Element und einer Gegendruckeinrichtung definiert wird, und Veranlassen des rotierenden Elements, die Fischgräte zwischen diesem Element und einer dem rotierenden Element zugewandten Seite der Gegendruckeinrichtung zu klemmen, während das die Gräte umgebende Fleisch durch die dem Fisch zugewandte Seite der Gegendruckeinrichtung in Position gehalten wird, wenn die Gräte herausgezogen wird.

2. Vorrichtung zum Entgräten von Fisch, vorzugsweise von Fisch-Stücken wie etwa Fisch-Filet,
**gekennzeichnet** durch ein Gehäuse (3,43), das ein mit Eingriffsmitteln (2,42) versehenes, drehbares, angetriebenes Element (1,41) aufnimmt, eine Öffnung (4) in dem Gehäuse (3,43), die dazu dient, einen Teil der Gräten-Eingriffsmittel (2,42) an dem angetriebenen Element (1,41) zugänglich zu machen, eine Gegendruckeinrichtung (6) an dem Ende der Öffnung (4), gegen welches die Gräten-Eingriffsmittel (2,42) durch die Drehung des angetriebenen Elements (1,41) bewegt werden, und einen zwischen der Gegendruckeinrichtung (6) und den Gräten-Eingriffsmitteln (2,42) gebildeten Spalt.

3. Vorrichtung nach Anspruch 2,
dadurch **gekennzeichnet**, daß die Gräten-Eingriffsmittel die Form von axial ausgedehnten Zähnen (2) haben.

4. Vorrichtung nach Anspruch 2,
dadurch **gekennzeichnet**, daß die Eingriffsmittel die Form einer schraubenförmigen Rippe (42) haben.

5. Vorrichtung nach Anspruch 3 oder 4,
dadurch **gekennzeichnet**, daß die radial gerichtete Oberfläche der schraubenförmigen Rippe oder der Zähne (2,42) ein Relief aufweist.

6. Vorrichtung nach einem der Ansprüche 2 bis 5,
dadurch **gekennzeichnet**, daß der zwischen den Gräten-Eingriffsmitteln (2,42) und der Gegendruckeinrichtung (6) gebildete Spalt einstellbar ist.

7. Vorrichtung nach einem der Ansprüche 2 bis 6,
**gekennzeichnet** durch eine drehbare Bürste (18), die benachbart zu dem angetriebenen Element (1) montiert ist und die Funktion hat, die Gräten-Eingriffsmittel (2) und die Zwischenräume dazwischen sauberzubürsten.

8. Vorrichtung nach einem der Ansprüche 2 bis 6,
dadurch **gekennzeichnet**, daß in dem angetriebenen Element (1,41) zwischen den Eingriffsmitteln (2,42) radiale Löcher (39) zum Durchblasen von Luft vorgesehen sind, um Ansammlungen von Fischabfällen durch die Öffnung (10,44) zu entfernen.

## Revendications

1. Procédé d'extraction des arêtes d'un poisson, de préférence à partir de morceaux de poisson, tels que des filets de poisson,
caractérisé en ce qu'on fait passer une partie d'une arête de poisson dans un intervalle défini entre un élément rotatif et un dispositif de contre-pression, et en ce que ledit élément rotatif vient pincer l'arête de poisson entre ledit élément et un côté dudit dispositif de contre-pression qui est tourné vers ledit élément rotatif, tandis que la chair autour de ladite arête est retenue en place par le côté du dispositif de contre-pression qui est tourné vers le poisson lorsque l'arête est retirée de la chair.

2. Dispositif d'extraction des arêtes d'un poisson , de préférence des morceaux de poisson, tels que des filets de poisson,
caractérisé par un carter (3,43) qui contient un élément tournant entraîné (1,41) pourvu de moyens d'attaque (2, 42) ; une ouverture (4) ménagée dans ledit carter (3,43) et qui sert à découvrir une partie des moyens d'attaque d'arête (2,42) dudit élément entraîné (1,41) ; un dispositif de contre-pression (6) situé à l'extrémité de l'ouverture (4) vers laquelle les moyens d'attaque d'arête (2, 42) sont déplacés par la rotation de l'élément entraîné (1,41) ; et un intervalle défini entre le dispositif de contre-pression (6) et les moyens d'attaque d'arête (2,42).

3. Dispositif suivant la revendication 2, caractérisé en ce que les moyens d'attaque d'arête sont sous la forme de dents s'étendant axialement (2).

4. Dispositif suivant la revendication 2, caractérisé en ce que les moyens d'attaque sont sous la forme d'une nervure hélicoïdale (42).

5. Dispositif suivant la revendication 3 ou 4, caractérisé en ce que la surface dirigée radialement de la nervure hélicoïdale ou des dents (2,42) présente des creux et des reliefs.

6. Dispositif suivant une quelconque des revendications 2 à 5,
caractérisé en ce que l'intervalle défini par lesdits moyens d'attaque d'arête (2,42) et ledit dispositif de contre-pression (6) est réglable.

7. Dispositif suivant une quelconque des revendications 2 à 6,
caractérisé par une brosse rotative (18) qui est montée près de l'élément entraîné (1) et qui fonctionne pour nettoyer par brossage les moyens d'attaque d'arête (2) et les intervalles entre ces moyens.

8. Dispositif suivant une quelconque des revendications 2 à 6,
caractérisé en ce que des trous radiaux (39) sont prévus dans l'élément entraîné (1,41) ,entre les moyens d'attaque (2,42), pour souffler de l'air par ces trous de façon à chasser les amas de déchets de poisson à travers ladite ouverture (10,44).
